# EUROPÄISCHE PATENTSCHRIFT

(11) **EP 3 315 902 B1**
(45) Veröffentlichungstag und Bekanntmachung des Hinweises auf die Patenterteilung: **06.09.2023**
(21) Anmeldenummer: 16196032.3
(22) Anmeldetag: 27.10.2016
(51) Int. Cl.: G01B 11/25

(54) **MESSVORRICHTUNG UND VERFAHREN ZUR TRIANGULATIONSMESSUNG**
MEASURING DEVICE AND METHOD FOR TRIANGULATION MEASUREMENT
DISPOSITIF DE MESURE ET PROCÉDÉ DE MESURE DE TRIANGULATION

(43) Veröffentlichungstag der Anmeldung: 02.05.2018
(73) Patentinhaber: Pepperl+Fuchs SE, 68307 Mannheim (DE)
(72) Erfinder: BLANKENBURG, Christoph, 67112 Mutterstadt (DE); STEINMANN, Hendrik, 64347 Griesheim (DE)
(74) Vertreter: Schiffer, Axel Martin

(56) Entgegenhaltungen:
- EP-A1- 2 442 067
- WO-A1-2007/059780
- WO-A1-2013/184340
- DE-A1- 19 638 727
- US-A1- 2006 083 422
- US-A1- 2009 059 241
- US-A1- 2014 152 769

## Beschreibung

Die vorliegende Erfindung bezieht sich in einem ersten Aspekt auf eine Messvorrichtung zur Triangulationsmessung nach dem Oberbegriff des Anspruchs 1.

In einem zweiten Gesichtspunkt betrifft die Erfindung ein Verfahren zur Triangulationsmessung nach dem Oberbegriff des Anspruchs 9.

In einer Triangulationsmessung wird Licht mit einem Lichtsender auf ein zu untersuchendes Objekt ausgesandt. Von dem beleuchteten Objektbereich wird Licht zurückgeworfen und mit einem Lichtempfänger nachgewiesen. Der Lichtempfänger kann eine räumliche Auflösung haben und ein Messbild aufnehmen. Bei dem Triangulationsprinzip sind der Lichtsender und Lichtempfänger zueinander quer zur Messrichtung versetzt oder in einem Winkel zueinander angeordnet, so dass in dem Messbild die Position des beleuchteten Objektbereichs vom Abstand des Objekts zur Messvorrichtung abhängt. Daher können Positions- oder Abstandsinformationen bezüglich des Objekts gewonnen werden.

Ein etabliertes Messverfahren nutzt eine linienförmige Beleuchtung. Hierbei wird Beleuchtungslicht in Form einer Linie / eines Lichtstreifens ausgesandt, typischerweise in Form einer geraden Linie. Abhängig von der Form des Objekts wird im Messbild aber keine gerade Linie, sondern eine verzerrte Linie oder ein Stufenverlauf aufgezeichnet. Daher kann aus dem im Messbild aufgezeichneten Verlauf eine Form- oder Positionsinformation des Objekts abgeleitet werden. Die Vermessung eines Objekts mit nur einem Lichtstreifen ist aber riskant und kann leicht zu Fehlern führen. Daher werden bei einer gattungsgemäßen Messvorrichtung mehrere linienförmige Beleuchtungen oder Lichtstreifen genutzt:
So umfasst eine gattungsgemäße Messvorrichtung zur Triangulationsmessung einen Lichtsender zum Aussenden von Beleuchtungslicht; eine Sendeoptik, welche das Beleuchtungslicht in mehreren Lichtstreifen zu einem Objekt leitet; einen Lichtempfänger zum Erzeugen eines Messbilds des Objekts durch Messung von Licht, das von beleuchteten Objektbereichen zurückgeworfen wird; und eine Auswerteeinrichtung zum Bestimmen einer Form- oder Positionsinformation des Objekts auf Grundlage des Messbilds.

In entsprechender Weise ist bei einem gattungsgemäßen Verfahren zur Triangulationsmessung vorgesehen, dass:
- mit einem Lichtsender Beleuchtungslicht ausgesendet wird,
- mit einer Sendeoptik das Beleuchtungslicht in mehreren Lichtstreifen in Richtung eines Objekts geleitet wird,
- mit einem Lichtempfänger Licht, das von beleuchteten Objektbereichen zurückgeworfen wird, gemessen wird und somit ein Messbild des Objekts aufgenommen wird,
- mit einer Auswerteeinrichtung eine Form- oder Positionsinformation des Objekts auf Grundlage des Messbilds bestimmt wird.

Eine solche Messvorrichtung und ein solches Messverfahren werden beispielsweise von der Anmelderin beschrieben in EP 2 287 560 B1 und sind auch bekannt aus US 6,542,249 B1 und US 2004/0032974 A1.

Bei einem solchen Multilinieneinsatz ist es erforderlich, Messinformationen, das heißt Bildpunkte im Messbild, korrekt den verschiedenen Lichtstreifen zuzuordnen. Dies ist insbesondere erschwert, wenn im Messbild aufgezeichnete Messlinien, die den Lichtstreifen entsprechen, diskontinuierliche Sprünge und/oder Lücken aufweisen. Sprünge und Lücken können zum Beispiel durch steile Flanken des Objekts entstehen. Dieses Problem der korrekten Zuordnung wird auch als Korrespondenzproblem bezeichnet.

Um eine korrekte Zuordnung zu gewährleisten, können die Lichtstreifen nacheinander ausgesendet werden. Dies erhöht aber die Messdauer und kann nur bei im Wesentlichen unbeweglichen Objekten genutzt werden. Alternativ können die Lichtstreifen aber auch mit unterschiedlichen Lichtwellenlängen erzeugt werden. Zum Unterscheiden der verschiedenen Lichtwellenlängen mit dem Lichtempfänger sind aber kostenintensive Farbdetektoren erforderlich. Diese haben bei gleichen Abmessungen wie Monochromdetektoren zudem eine schlechtere Auflösung. Schließlich beeinflusst die Objektfarbe auch die Intensität von zurückgeworfenem Licht in Abhängigkeit von der Wellenlänge des jeweiligen Lichtstreifens.

In DE 196 38 727, EP 2 442 067, WO 2007 059780, US 2009 059241, US 2006 083422, US 2014 152769 und WO 2013/184340 A1 sind jeweils gattungsgemäße Meßvorrichtungen und gattungsgemäße Verfahren beschrieben.

Als eine **Aufgabe** der Erfindung kann angesehen werden, eine Messvorrichtung und ein Verfahren zur Triangulationsmessung anzugeben, mit denen ein Objekt durch mehrere Lichtstreifen besonders zuverlässig und präzise vermessen werden kann.

Diese Aufgabe wird durch die Messvorrichtung mit den Merkmalen des Anspruchs 1 und durch das Verfahren mit den Merkmalen des Anspruchs 9 gelöst.

Vorteilhafte Varianten der erfindungsgemäßen Messvorrichtung und des erfindungsgemäßen Verfahrens sind Gegenstand der abhängigen Ansprüche und werden außerdem in der folgenden Beschreibung erläutert.

Bei der Messvorrichtung der oben genannten Art ist erfindungsgemäß zum Zuordnen, welcher Bereich im Messbild zu welchem Lichtstreifen gehört, die Sendeoptik so gestaltet, dass sie das Beleuchtungslicht in unterschiedlich geformten Lichtstreifen zum Objekt leitet.

In analoger Weise wird bei dem Verfahren der oben genannten Art erfindungsgemäß zum Zuordnen, welcher Bereich im Messbild zu welchem Lichtstreifen gehört, mit der Sendeoptik das Beleuchtungslicht in unterschiedlich geformten Lichtstreifen zum Objekt geleitet.

Als ein wesentlicher Gedanke der Erfindung kann angesehen werden, die Lichtstreifen des Beleuchtungslichts nicht gleich geformt, sondern zueinander unterschiedlich geformt zu gestalten. Dadurch kann ein im Messbild aufgezeichneter Streifen eindeutig einem bestimmten Lichtstreifen zugeordnet werden. Insbesondere ist dies auch für zueinander parallele Lichtstreifen möglich. Vorteilhafterweise können mehrere Lichtstreifen gleichzeitig ausgesandt werden und hinsichtlich des Lichtempfängers sind keine höheren Anforderungen gestellt; beispielsweise ist keine Farberkennung erforderlich, um die verschiedenen Streifen zu unterscheiden.

Damit die Lichtstreifen unterschiedlich sind, kann jeder Lichtstreifen eine Struktur haben, die sich von der Struktur benachbarter oder aller anderer Lichtstreifen unterscheidet. Erfindungsgemäß ist die Sendeoptik so gestaltet, dass jeder Lichtstreifen jeweils mindestens zwei benachbarte, insbesondere parallele, Linien umfasst, wobei die Linien eine unterschiedliche Breite haben und/oder eine der Linien eine gepunktete oder gestrichelte Linie ist. Unterschiedliche Lichtstreifen können sich in der genannten Breite oder in der Art der gepunkteten oder gestrichelten Linie oder in der Anordnung der gepunkteten oder gestrichelten Linie relativ zu der anderen Linie desselben Lichtstreifens unterscheiden. Die Anordnung kann insbesondere angeben, ob eine punktete Linie oberhalb oder unterhalb einer anderen Linie desselben Streifens liegt.

Die Auswerteeinrichtung kann dazu gestaltet sein, das Messbild auszuwerten und darin diskontinuierliche Abschnitte eines Streifens als Teile desselben Streifens zu identifizieren. Hierzu wird von jedem diskontinuierlichen Abschnitt die Struktur erfasst. Die Struktur kann bei den obigen Beispielen etwa darin bestehen, dass eine gepunktete und eine durchgängige Linie nebeneinander liegen. Eine andere Struktur kann etwa darin bestehen, dass eine gestrichelte und eine durchgängige Linie nebeneinander liegen. Diejenigen Abschnitte, die die gleiche Struktur aufweisen, werden nun demselben Streifen zugeordnet. Darüber hinaus kann dieser im Messbild erkannte Streifen aufgrund seiner Struktur einem bestimmten Lichtstreifen zugeordnet werden.

Die Gefahr einer falschen Zuordnung von im Messbild enthaltenen Streifen zu den auf die Probe gesandten Lichtstreifen ist besonders hoch für benachbarte (Licht-)Streifen. Daher ist erfindungsgemäß vorgesehen, dass jeweils zueinander benachbarte Lichtstreifen unterschiedlich sind. Es müssen nicht sämtliche Lichtstreifen voneinander verschieden sein. Dadurch ist eine einfachere Gestaltung der Sendeoptik möglich. Alternativ können aber auch sämtliche Lichtstreifen voneinander verschieden sein, womit eine besonders hohe Zuverlässigkeit erreicht wird.

Weil jeder Lichtstreifen mindestens zwei Linien umfasst, muss gewährleistet sein, dass zuverlässig bestimmbar ist, ob im Messbild aufgezeichnete benachbarte Linien zu demselben Lichtstreifen oder zu zwei benachbarten Lichtstreifen gehören. Hierzu ist die Sendeoptik erfindungsgemäß so gestaltet, dass ein Abstand zwischen benachbarten Lichtstreifen größer ist als, insbesondere mindestens doppelt so groß wie, ein Abstand zwischen den Linien, die zu demselben Lichtstreifen gehören.

Die Sendeoptik ist erfindungsgemäß so gestaltet, dass jeder Lichtstreifen zumindest eine Wellenlinie umfasst und unterschiedliche Lichtstreifen sich in ihrer Frequenz und gegebenenfalls auch in ihrer Amplitude, Phase und/oder Form unterscheiden. Die Wellenlinie kann zum Beispiel eine Sinus-Welle sein. Verschiedene Formen können zum Beispiel eine Sinus-Wellenform, Rechteckform, Sägezahnform oder eine Aneinanderreihung hiervon umfassen. Auch können diese Formen mit geraden Linienabschnitten abwechseln, also beispielsweise können zwei Rechteckformen desselben Streifens durch einen geraden Linienabschnitt beabstandet sein. Indem dieser Abstand für verschiedene Lichtstreifen unterschiedlich gewählt wird, können wiederum Lichtstreifen voneinander unterscheidbar sein.

Die Sendeoptik kann ein strukturiertes Element umfassen, welches auftreffendem Beleuchtungslicht eine räumliche Struktur, insbesondere wie oben beschrieben, aufprägt. Das strukturierte Element kann zum Beispiel ein diffraktives optisches Element sein, welches eine Struktur zum Erzeugen der unterschiedlichen Lichtstreifen hat. Ein diffraktives optisches Element kann einen transparenten Träger, etwa einen Glasträger, umfassen, auf dem eine Mikrostruktur aufgebracht ist, beispielsweise Rillen oder andere Vertiefungen. Auftreffendes Licht wird an der Mikrostruktur gebeugt, wobei Teilstrahlen des auftreffenden Licht miteinander interferieren. Hierdurch werden die Lichtstreifen gebildet. Die Mikrostruktur ist so geformt, dass Licht einer bestimmten Wellenlänge oder eines bestimmten Wellenlängenbereichs so interferiert, dass dabei die gewünschten unterschiedlichen Lichtstreifen gebildet werden. Licht anderer Wellenlängen erzeugt bei Beugung am diffraktiven optischen Element hingegen nicht die gewünschten unterschiedlichen Lichtstreifen.

Demgemäß kann das diffraktive optische Element für einen Lichtwellenlängenbereich ausgelegt sein, bei welchem es die Linienformen erzeugt, und der Lichtsender kann so gestaltet sein, dass allein Beleuchtungslicht in diesem Lichtwellenlängenbereich auf das diffraktive optische Element gestrahlt wird. Hierzu kann der Lichtsender einen Laser der gewünschten Wellenlänge umfassen oder es kann ein entsprechender Farbfilter auf den Lichtsender folgen.

Durch das diffraktive optische Element können die unterschiedlichen Lichtstreifen gleichzeitig und ohne Bewegung einer Komponente der Messvorrichtung erzeugt werden. Auch ist es nicht erforderlich, verschiedene Bereiche des diffraktiven optischen Elements nacheinander zu beleuchten; vielmehr kann das gesamte diffraktive optische Element gleichzeitig beleuchtet werden.

Bei alternativen Ausführungen kann die Sendeoptik auch ein Multi-Spiegel-Array aufweisen, dessen Spiegel so ausgerichtet sind, dass auftreffendes Beleuchtungslicht als unterschiedliche Lichtstreifen weitergeleitet wird. Als ein Vorteil ist hierbei durch Umstellen der Spiegel eine Änderung der Lichtstreifen möglich. Die Spiegel können für einen einfacheren Aufbau aber auch starr montiert sein.

Bei einer weiteren Ausführungsalternative weist die Sendeoptik ein Mikrolinsen-Array auf, dessen Linsen so angeordnet und gebildet sind, dass auftreffendes Beleuchtungslicht in den unterschiedlichen Lichtstreifen transmittiert wird. Hierzu können die Linsen unterschiedlich gebildet sein, insbesondere teilweise verdunkelt sein, um unterschiedliche Transmissionsgrade zu bewirken.

Verfahrensvarianten ergeben sich auch aus dem bestimmungsgemäßen Gebrauch der beschriebenen Ausführungsformen erfindungsgemäßer Messvorrichtungen. Ebenso sind Verfahrensvarianten auch als Varianten der Messvorrichtung aufzufassen.

Weitere Vorteile und Merkmale der Erfindung werden nachstehend mit Bezug auf die beigefügten schematischen Figuren beschrieben. Hierin zeigen:
- Fig. 1: eine schematische Darstellung einer Ausführungsform einer erfindungsgemäßen Messvorrichtung;
- Fig. 2: ein beispielhaftes Messbild;

- Fig. 3: ein beispielhaftes Messbild;

- Fig. 4: ein Messbild einer herkömmlichen, nicht erfindungsgemäßen Messvorrichtung.

Gleiche und gleich wirkende Bestandteile sind in den Figuren in der Regel mit denselben Bezugszeichen gekennzeichnet.

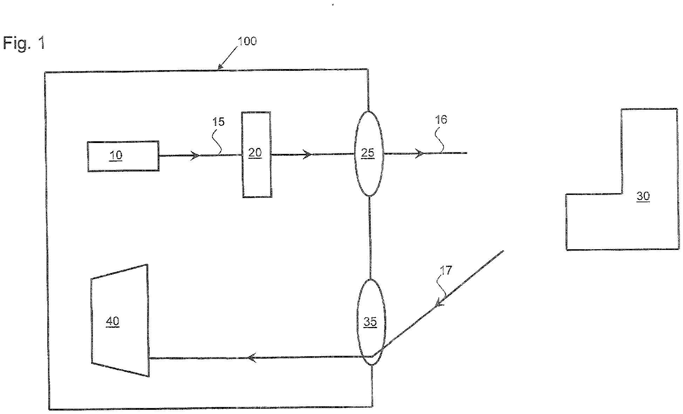

Fig. 1 zeigt ein Ausführungsbeispiel einer erfindungsgemäßen Messvorrichtung 100. Diese umfasst einen Lichtsender 10 und einen Lichtempfänger 40, welche für eine Triangulationsmessung angeordnet und gestaltet sind. Der Lichtsender sendet Beleuchtungslicht 15 aus. Mit einer Sendeoptik 20, 25 wird das Beleuchtungslicht 15 in Form von mehreren Streifen, welche auch als Lichtstreifen 16 bezeichnet werden, weiter in Richtung eines zu untersuchenden Objekts 30 geleitet. Hierbei hat das Beleuchtungslicht im Querschnitt, das heißt in einem Schnitt quer oder senkrecht zur Ausbreitungsrichtung, mehrere voneinander beabstandete Streifen. Die Streifen können parallel zueinander sein.

Treffen die Lichtstreifen auf das Objekt 30, wird von den beleuchteten Objektbereichen Licht 17 zurückgeworfen. Das zurückgeworfene Licht 17 wird mit dem Lichtempfänger 40 nachgewiesen. Der Lichtempfänger 40 kann eine Kamera sein, die ein zwei-dimensionales Messbild aufnimmt. Das zurückgeworfene Licht 17 führt in dem Messbild zu Streifen, welche den Lichtstreifen entsprechen.

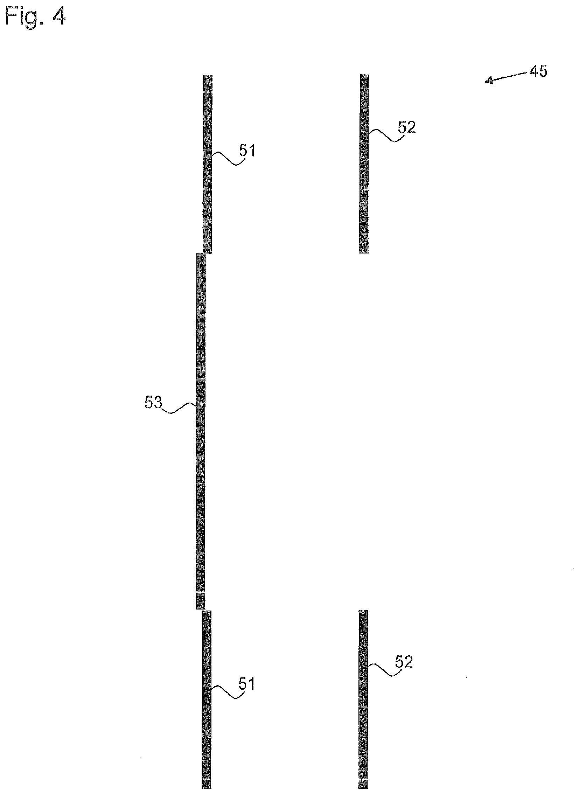

Ein Messbild 45, wie es von einer herkömmlichen, nicht erfindungsgemäßen Messvorrichtung aufgenommen wird, in beispielhaft in Fig. 4 gezeigt. Dargestellt sind zwei aufgezeichnete Streifen 51 und 52, die jeweils unterbrochen sind und zwei ausgesandten Lichtstreifen entsprechen. In einem mittleren Streifenbereich 53 liegt ein Sprung vor und es ist auch nur einer der Streifen 51 und 52 aufgezeichnet. In diesem Fall ist nicht eindeutig festzustellen, ob der mittlere Streifenbereich 53 zum ersten Streifen 51 oder zum zweiten Streifen 52 gehört.

Dieses Korrespondenzproblem wird bei der Erfindung gelöst durch die Gestaltung der Sendeoptik 20, siehe Fig. 1.

Hierzu weist die Sendeoptik 20 eine Struktur auf, durch welche dem Beleuchtungslicht 15 eine Struktur / ein Muster aufgeprägt wird. Das Muster ist derart, dass verschiedene Lichtstreifen zueinander unterschiedlich sind. Hierzu kann die Sendeoptik 20 beispielsweise ein diffraktives optisches Element sein oder ein solches umfassen. Das diffraktive optische Element hat eine Struktur, beispielsweise Vertiefungen oder Rillen, durch welche Licht gebeugt wird und so interferiert, dass mehrere Lichtstreifen mit verschiedenen Mustern entstehen.

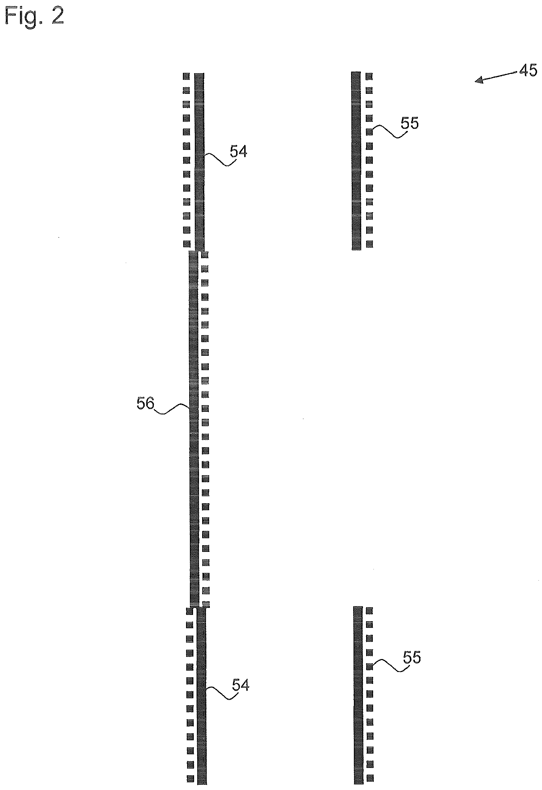

Fig. 2 zeigt beispielhaft ein Messbild 45, wie es der Lichtempfänger 40 aufzeichnet, wenn ein Objekt 30 mit den Lichtstreifen, die verschiedene Muster haben, bestrahlt wird. In dem Messbild 45 sind zwei Lichtstreifenabschnitte 54, die getrennt voneinander in einer Linie liegen, und zwei Lichtstreifenabschnitte 55, die getrennt voneinander in einer Linie liegen, erkennbar. Die Unterbrechung der Lichtstreifenabschnitte 54 und der Lichtstreifenabschnitte 55 kann beispielsweise bei einem Objekt 30 der Fall sein, welches eine Stufe aufweist. In dem Messbild 45 ist in der Mitte ein einziger Lichtstreifenabschnitt 56 aufgezeichnet. Dieser Lichtstreifenabschnitt 56 kann nun eindeutig den Lichtstreifenabschnitten 55 zugeordnet werden, obwohl er räumlich näher an den Lichtstreifenabschnitten 54 liegt. Für diese Zuordnung wird das Muster der Lichtstreifenabschnitte 54, 55, 56 ausgewertet. Die Lichtstreifenabschnitte 55 und 56 weisen die gleiche Struktur auf, nämlich jeweils eine durchgängige Linie und eine gepunktete Linie auf, welche in Fig. 2 rechts von der durchgängigen Linie liegt. Allgemeiner ausgedrückt liegt die gepunktete Linie auf einer ersten Seite der durchgängigen Linie. Die Lichtstreifenabschnitte 54 weisen eine andere Struktur auf, nämlich jeweils eine durchgängige Linie und eine gepunktete Linie, welche aber in Fig. 2 links von der durchgängigen Linie liegt. Allgemeiner ausgedrückt liegt die gepunktete Linie auf einer der ersten Seite gegenüberliegenden Seite der durchgängigen Linie. Durch diese unterschiedlichen Strukturen der Lichtstreifenabschnitte kann geschlussfolgert werden, dass diejenigen Lichtstreifenabschnitte mit gleicher Struktur zusammengehören. Zudem kann aus der Struktur darauf geschlossen werden, welche Lichtstreifenabschnitte im Messbild zu welchem der mit dem Lichtsender 10 und der Sendeoptik 20 ausgesandten Lichtstreifen gehören.

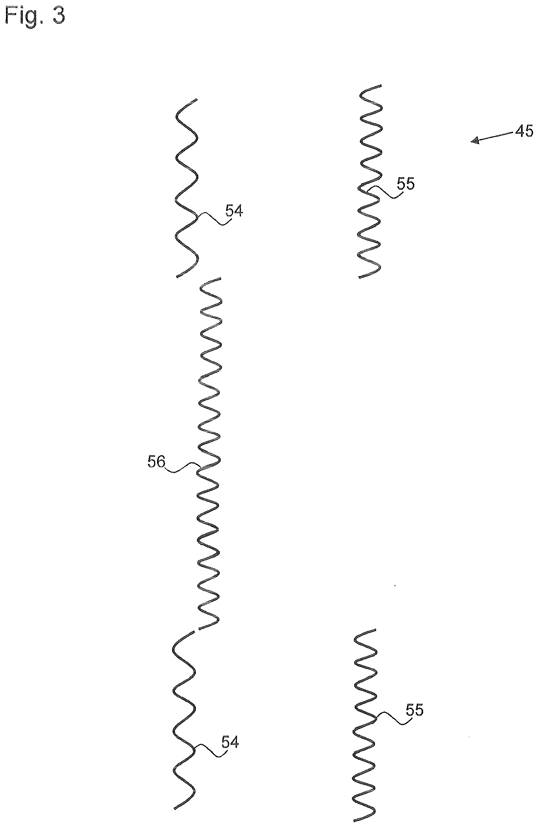

Ein res Beispiel eines Messbilds 45 ist in Fig. 3 dargestellt. Hier sind wiederum zwei Lichtstreifen aufgezeichnet, welche im Messbild zu mehreren Lichtstreifenabschnitten 54, 55, 56 führen. In diesem Fall umfasst jeder Lichtstreifen eine Wellenstruktur, beispielsweise eine Sinus-Wellenform. Die Frequenz dieser Wellenform ist für unterschiedliche Lichtstreifen verschieden, was wiederum durch die Gestaltung der Sendeoptik als diffraktives optisches Element erreicht wird. Die Lichtstreifenabschnitte 55 und 56 haben die gleiche Struktur, nämlich eine Wellenform mit höherer Frequenz als eine Frequenz der Wellenform der Lichtstreifenabschnitte 54. So kann geschlussfolgert werden, dass die Lichtstreifenabschnitte 55 und 56 zusammengehören und nicht zu den Lichtstreifenabschnitten 54 gehören.

Vorteilhafterweise kann durch die verschiedenen Lichtstreifenstrukturen festgestellt werden, welche Lichtstreifenabschnitte im Messbild zu demselben Lichtstreifen gehören, und es kann auch ein bestimmter ausgesandter Lichtstreifen identifiziert werden, zu dem diese Lichtstreifenabschnitte gehören. Insbesondere bei zueinander parallel verlaufenden ausgesandten Lichtstreifen ist dies ein bedeutsamer Vorteil.

## Patentansprüche

1. Messvorrichtung zur Triangulationsmessung mit
- einem Lichtsender (10) zum Aussenden von Beleuchtungslicht (15),
- einer Sendeoptik (20, 25), welche das Beleuchtungslicht (15) in mehreren Lichtstreifen zu einem Objekt (30) leitet,
- ein Lichtempfänger zum Erzeugen eines Messbilds des Objekts (30) durch Messung von Licht (17), das von beleuchteten Objektbereichen zurückgeworfen wird,
- einer Auswerteeinrichtung zum Bestimmen einer Form- oder Positionsinformation des Objekts (30) auf Grundlage des Messbilds,
wobei zum Zuordnen, welcher Bereich im Messbild zu welchem Lichtstreifen gehört, die Sendeoptik (20, 25) so gestaltet ist, dass sie das Beleuchtungslicht (15) in unterschiedlich geformten Lichtstreifen (16) zum Objekt (30) leitet, wobei die Sendeoptik (20, 25) so gestaltet ist, dass jeder Lichtstreifen jeweils mindestens zwei benachbarte Linien umfasst, die eine unterschiedliche Breite haben, oder wobei eine Linie eine gepunktete oder gestrichelte Linie ist, wobei unterschiedliche Lichtstreifen sich in der genannten Breite oder in der Art der gepunkteten oder gestrichelten Linie oder in der Anordnung der gepunkteten oder gestrichelten Linie relativ zu der anderen Linie desselben Lichtstreifens unterscheiden,
wobei jeweils zueinander benachbarte Lichtstreifen unterschiedlich sind und wobei die Sendeoptik (20, 25) so gestaltet ist, dass ein Abstand zwischen benachbarten Lichtstreifen größer ist als ein Abstand zwischen den Linien, die zu demselben Lichtstreifen gehören,
**dadurch gekennzeichnet,**
**dass** die Sendeoptik (20, 25) so gestaltet ist, dass jeder Lichtstreifen zumindest eine Wellenlinie umfasst und unterschiedliche Lichtstreifen sich in einer Frequenz der jeweiligen Wellenlinie unterscheiden.

2. Messvorrichtung nach Anspruch 1,
**dadurch gekennzeichnet,**
**dass** sämtliche Lichtstreifen voneinander verschieden sind.

3. Messvorrichtung nach Ansprüche 1 oder 2,
**dadurch gekennzeichnet,**
**dass** Wellenlinien der unterschiedlichen Lichtstreifen sich in einer Amplitude, Phase und/oder Form der jeweiligen Wellenlinie unterscheiden.

4. Messvorrichtung nach einem der Ansprüche 1 bis 3,
**dadurch gekennzeichnet,**
**dass** die Sendeoptik (20, 25) ein diffraktives optisches Element (20) umfasst, welches eine Struktur zum Erzeugen der Lichtstreifen hat.

5. Messvorrichtung nach Anspruch 4,
**dadurch gekennzeichnet,**
**dass** das diffraktive optische Element (20) für einen Lichtwellenlängenbereich ausgelegt ist, bei welcher es die Linienformen erzeugt, und
**dass** der Lichtsender (10) so gestaltet ist, dass allein Beleuchtungslicht (15) in diesem Lichtwellenlängenbereich auf das diffraktive optische Element (20) gestrahlt wird.

6. Messvorrichtung nach einem der Ansprüche 1 bis 5,
**dadurch gekennzeichnet,**
**dass** die Sendeoptik (20, 25) ein Multi-Spiegel-Array aufweist, dessen Spiegel so ausgerichtet sind, dass auftreffendes Beleuchtungslicht (15) in den unterschiedlichen Lichtstreifen weitergeleitet wird.

7. Messvorrichtung nach einem der Ansprüche 1 bis 6,
**dadurch gekennzeichnet,**
**dass** die Sendeoptik (20, 25) ein Mikrolinsen-Array aufweist, deren Linsen so angeordnet und gebildet sind, dass auftreffendes Beleuchtungslicht (15) in den unterschiedlichen Lichtstreifen transmittiert wird.

8. Messvorrichtung nach einem der Ansprüche 1 bis 7,
**dadurch gekennzeichnet,**
**dass** die Auswerteeinrichtung dazu gestaltet ist, im Messbild diskontinuierliche Streifenabschnitte als Teile desselben Streifens zu identifizieren, indem die Auswerteeinrichtung eine Struktur von jedem diskontinuierlichen Abschnitt erfasst und diejenigen Streifenabschnitte, die die gleiche Struktur aufweisen, demselben Streifen zuordnet.

9. Verfahren zur Triangulationsmessung, bei dem
- mit einem Lichtsender (10) Beleuchtungslicht (15) ausgesendet wird,
- mit einer Sendeoptik (20, 25) das Beleuchtungslicht (15) in mehreren Lichtstreifen in Richtung eines Objekts (30) geleitet wird,
- mit einem Lichtempfänger Licht (17), das von beleuchteten Objektbereichen zurückgeworfen wird, gemessen wird und somit ein Messbild des Objekts (30) aufgenommen wird,
- mit einer Auswerteeinrichtung eine Form- oder Positionsinformation des Objekts (30) auf Grundlage des Messbilds bestimmt wird,
wobei zum Zuordnen, welcher Bereich im Messbild zu welchem Lichtstreifen gehört, mit der Sendeoptik (20, 25) das Beleuchtungslicht (15) in unterschiedlich geformten Lichtstreifen zum Objekt (30) geleitet wird,
wobei die Sendeoptik (20, 25) so gestaltet ist, dass jeder Lichtstreifen jeweils mindestens zwei benachbarte Linien umfasst, die eine unterschiedliche Breite haben, oder wobei eine Linie eine gepunktete oder gestrichelte Linie ist, wobei unterschiedliche Lichtstreifen sich in der genannten Breite oder in der Art der gepunkteten oder gestrichelten Linie oder in der Anordnung der gepunkteten oder gestrichelten Linie relativ zu der anderen Linie desselben Lichtstreifens unterscheiden,
wobei jeweils zueinander benachbarte Lichtstreifen unterschiedlich sind und wobei die Sendeoptik (20, 25) so gestaltet ist, dass ein Abstand zwischen benachbarten Lichtstreifen größer ist als ein Abstand zwischen den Linien, die zu demselben Lichtstreifen gehören,
**dadurch gekennzeichnet,**
**dass** die Sendeoptik (20, 25) so gestaltet ist, dass jeder Lichtstreifen zumindest eine Wellenlinie umfasst und unterschiedliche Lichtstreifen sich in einer Frequenz der jeweiligen Wellenlinie unterscheiden.

10. Verfahren nach Anspruch 9,
**dadurch gekennzeichnet,**
**dass** die Sendeoptik (20, 25) ein diffraktives optisches Element (20) umfasst, mit dem die unterschiedlichen Lichtstreifen gleichzeitig und ohne Bewegung einer Komponente der Messvorrichtung erzeugt werden.

## Claims

1. Measuring device for triangulation measurement, having
- a light transmitter (10) for emitting illuminating light (15),
- a transmitting optical system (20, 25), which directs the illuminating light (15) in a plurality of light strips to an object (30),
- a light receiver for generating a measurement image of the object (30) by measuring light (17) thrown back by illuminated object areas,
- an evaluation unit for determining form or position information of the object (30) based on the measurement image,
wherein the transmitting optical system (20, 25) is designed, for the assignment of which area in the measurement image belongs to which light strip, in such a way that it directs the illuminating light (15) in differently formed light strips (16) to the object (30),
wherein the transmitting optical system (20, 25) is designed so that each light strip comprises at least two neighboring lines, which have a different width, or wherein one line is a dotted or dashed line,
wherein different light strips differ in the said width or in the type of the dotted or dashed line or in the arrangement of the dotted or dashed line relative to the other line of the same light strip,
wherein respectively neighboring light strips are different from each other, and
wherein the transmitting optical system (20, 25) is designed so that a distance between neighboring light strips is greater than a distance between the lines which belong to the same light strip,
**characterized in that**
the transmitting optical system (20, 25) is designed so that each light strip comprises at least one wave line and different light strips differ in a frequency of the respective wave line.

2. Measuring device according to claim 1,
**characterized in that**
all light strips are different from each other.

3. Measuring device according to claims 1 or 2,
**characterized in that**
wave lines of the different light strips differ in an amplitude, a phase and/or a form of the respective wave line.

4. Measuring device according to any one of claims 1 to 3,
**characterized in that**
the transmitting optical system (20, 25) comprises a diffractive optical element (20), which has a structure for generating the light strips.

5. Measuring device according to claim 4,
**characterized in that**
the diffractive optical element (20) is designed for a light wavelength range, in which it generates the line forms, and
**in that** the light transmitter (10) is designed so that solely illuminating light (15) in this light wavelength range is radiated onto the diffractive optical element (20).

6. Measuring device according to any one of claims 1 to 5,
**characterized in that**
the transmitting optical system (20, 25) has a multi-mirror array, of which the mirrors are orientated so that impinging illuminating light (15) is directed further in the different light strips.

7. Measuring device according to any one of claims 1 to 6,
**characterized in that**
the transmitting optical system (20, 25) has an array of microlenses, of which the lenses are arranged and formed so that impinging illuminating light (15) is transmitted in the different light strips.

8. Measuring device according to any one of claims 1 to 7,
**characterized in that**
the evaluation unit is designed to identify discontinuous strip portions in the measurement image as parts of the same strip **in that** the evaluation unit detects a structure of each discontinuous portion and assigns those strip portions that have the same structure to the same strip.

9. Method for triangulation measurement, wherein
- with a light transmitter (10), illuminating light (15) is emitted,
- with a transmitting optical system (20, 25), the illuminating light (15) is directed in a plurality of light strips in the direction of an object (30),
- with a light receiver, light (17) thrown back from illuminated object areas is measured and a measurement image of the object (30) is thus recorded,
- with an evaluation unit, form or position information of the object (30) is determined based on the measurement image,
wherein, for the assignment of which area in the measurement image belongs to which light strip, the illuminating light (15) is directed with the transmitting optical system (20, 25) in differently formed light strips to the object (30),
wherein the transmitting optical system (20, 25) is designed so that each light strip comprises at least two neighboring lines, which have a different width, or wherein one line is a dotted or dashed line,
wherein different light strips differ in the said width or in the type of the dotted or dashed line or in the arrangement of the dotted or dashed line relative to the other line of the same light strip,
wherein respectively neighboring light strips are different from each other, and
wherein the transmitting optical system (20, 25) is designed so that a distance between neighboring light strips is greater than a distance between the lines which belong to the same light strip,
**characterized in that**
the transmitting optical system (20, 25) is designed so that each light strip comprises at least one wave line and different light strips differ in a frequency of the respective wave line.

10. Method according to claim 9,
**characterized in that**
the transmitting optical system (20, 25) has a diffractive optical element (20), with which the different light strips are generated simultaneously and without movement of a component of the measuring device.

## Revendications

1. Dispositif de mesure pour la mesure de triangulation comprenant
- un émetteur de lumière (10) pour l'émission d'une lumière d'éclairage (15),
- une optique d'émission (20, 25), laquelle achemine la lumière d'éclairage (15) en plusieurs bandes de lumière vers un objet (30),
- un récepteur de lumière pour générer une image de mesure de l'objet (30) par mesure de la lumière (17) qui est renvoyée par les zones d'objet éclairées,
- un système d'évaluation pour déterminer une information de forme ou de position de l'objet (30) sur la base de l'image de mesure,
dans lequel pour affecter quelle zone dans l'image de mesure appartient à quelle bande de lumière, l'optique d'émission (20, 25) est conçue de sorte qu'elle achemine la lumière d'éclairage (15) en bandes de lumière (16) formées de façon différente vers l'objet (30), dans lequel l'optique d'émission (20, 25) est conçue de sorte que chaque bande de lumière comprend respectivement au moins deux lignes voisines, qui possèdent une largeur différente, ou dans lequel une ligne est une ligne en pointillés ou petits traits,
dans lequel différentes bandes de lumière se différencient par la largeur citée ou par le type de la ligne en pointillés ou petits traits ou par la disposition de la ligne en pointillés ou petits traits par rapport à l'autre ligne de la même bande de lumière,
dans lequel des bandes de lumière respectivement voisines les unes des autres sont différentes et
dans lequel l'optique d'émission (20, 25) est conçue de sorte qu'une distance entre des bandes de lumière voisines est plus grande qu'une distance entre les lignes qui appartiennent à la même bande de lumière,
**caractérisé en ce**
**que** l'optique d'émission (20, 25) est conçue de sorte que chaque bande de lumière comprend au moins une ligne ondulée et différentes bandes de lumière se différencient par une fréquence de la ligne ondulée respective.

2. Dispositif de mesure selon la revendication 1,
**caractérisé en ce**
**que** toutes les bandes de lumière sont différentes les unes des autres.

3. Dispositif de mesure selon l'une quelconque des revendications 1 ou 2,
**caractérisé en ce**
**que** les lignes ondulées des bandes de lumière différentes se différencient par une amplitude, phase et/ou forme de la ligne ondulée respective.

4. Dispositif de mesure selon l'une quelconque des revendications 1 à 3,
**caractérisé en ce**
**que** l'optique d'émission (20, 25) comprend un élément optique diffractif (20), lequel possède une structure pour générer les bandes de lumière.

5. Dispositif de mesure selon la revendication 4,
**caractérisé en ce**
**que** l'élément optique diffractif (20) est conçu pour une gamme de longueurs d'onde optique pour laquelle il génère les formes linéaires, et
**que** l'émetteur de lumière (10) est conçu de sorte que seule la lumière d'éclairage (15) est amenée à rayonner dans cette gamme de longueurs d'onde optique sur l'élément optique diffractif (20).

6. Dispositif de mesure selon l'une quelconque des revendications 1 à 5,
**caractérisé en ce**
**que** l'optique d'émission (20, 25) présente un réseau de miroirs multiples, dont les miroirs sont orientés de sorte que la lumière d'éclairage (15) incidente est transmise dans les différentes bandes de lumière.

7. Dispositif de mesure selon l'une quelconque des revendications 1 à 6,
**caractérisé en ce**
**que** l'optique d'émission (20, 25) présente un réseau de microlentilles, dont les lentilles sont disposées et formées de sorte que la lumière d'éclairage (15) incidente est transmise dans les différentes bandes de lumière.

8. Dispositif de mesure selon l'une quelconque des revendications 1 à 7,
**caractérisé en ce**
**que** le système d'évaluation est conçu pour identifier dans l'image de mesure des sections de bande discontinues comme parties de la même bande, du fait que le système d'évaluation détecte une structure de chaque section discontinue et affecte les sections de bande qui présentent la structure identique à la même bande.

9. Procédé pour la mesure de triangulation, selon lequel
- une lumière d'éclairage (15) est émise avec un émetteur de lumière (10),
- la lumière d'éclairage (15) est acheminée en plusieurs bandes de lumière en direction d'un objet (30) avec une optique d'émission (20, 25),
- la lumière (17), qui est renvoyée par les zones d'objet éclairées, est mesurée avec un récepteur de lumière et une image de mesure de l'objet (30) est enregistrée de cette manière,
- une information de forme ou de position de l'objet (30) est déterminée sur la base de l'image de mesure avec un système d'évaluation,
dans lequel pour affecter quelle zone appartient à quelle bande de lumière dans l'image de mesure, la lumière d'éclairage (15) est acheminée en bandes de lumière formées de façon différente vers l'objet (30) avec l'optique d'émission (20, 25),
dans lequel l'optique d'émission (20, 25) est conçue de sorte que chaque bande de lumière comprend respectivement au moins deux lignes voisines, qui possèdent une largeur différente, ou dans lequel une ligne est une ligne en pointillés ou petits traits,
dans lequel différentes bandes de lumière se différencient par la largeur citée ou par le type de la ligne en pointillés ou petits traits ou par la disposition de la ligne en pointillés ou petits traits par rapport à l'autre ligne de la même bande de lumière,
dans lequel des bandes de lumière respectivement voisines les unes des autres sont différentes et
dans lequel l'optique d'émission (20, 25) est conçue de sorte qu'une distance entre des bandes de lumière voisines est plus grande qu'une distance entre les lignes qui appartiennent à la même bande de lumière,
**caractérisé en ce**
**que** l'optique d'émission (20, 25) est conçue de sorte que chaque bande de lumière comprend au moins une ligne ondulée et différentes bandes de lumière se différencient par une fréquence de la ligne ondulée respective.

10. Procédé selon la revendication 9,
**caractérisé en ce**
**que** l'optique d'émission (20, 25) comprend un élément optique diffractif (20), avec lequel les différentes bandes de lumière sont générées simultanément et sans mouvement d'un composant du dispositif de mesure.
